## Europäisches Patentamt
## European Patent Office
## Office européen des brevets

(19)

(11) Numéro de publication: **0 273 798 B1**

(12) # FASCICULE DE BREVET EUROPEEN

(45) Date de publication du fascicule du brevet:
24.10.90

(51) Int. Cl.⁵: **B65G 17/32**

(21) Numéro de dépôt: 87402692.5

(22) Date de dépôt: 27.11.87

(54) Dispositif de préhension et de retenue d'objets, tels que par exemple des récipients, sur un convoyeur, et convoyeur équipé de ce dispositif.

(30) Priorité: 01.12.86 FR 8616752

(43) Date de publication de la demande:
06.07.88 Bulletin 88/27

(45) Mention de la délivrance du brevet:
24.10.90 Bulletin 90/43

(84) Etats contractants désignés:
AT BE CH DE ES GB GR IT LI LU NL SE

(56) Documents cités:
DE-A- 2 134 985
FR-A- 1 070 445
US-A- 2 249 659

PATENT ABSTRACTS OF JAPAN,
vol. 7, no. 110 (M-214)[1255], 13 mai 1983; &
JP-A-58 31 811 (HITACHI SEISAKUSHO K.K.) 24-02-1983

(73) Titulaire: CMB REMY, 50 Avenue des Fenots,
F-28104 Dreux Cédex(FR)

(72) Inventeur: Lemaire, Didier, rue de la Pinède Les
Bochets, F-28500 Cherisy(FR)
Inventeur: Dronet, Jean-Marc, le Bourg§Neuvy Au
Houlme, F-61210 Putanges Pont Ecrepin(FR)

(74) Mandataire: Polus, Camille et al, c/o Cabinet
Lavoix 2, Place d'Estienne d'Orves, F-75441 Paris
Cedex 09(FR)

## Description

La présente invention a essentiellement pour objet un dispositif de préhension et de retenue d'objets, tels que par exemple des récipients, sur un convoyeur à deux chaînes, courroies ou analogues.

Elle vise également un convoyeur équipé de ce dispositif.

Il existe déjà des convoyeurs à deux chaînes ou corroies sans fin munies de plaques transversales solidaires par leurs extrémités des deux chaînes ou courroies et comportant des orifices susceptibles de recevoir des récipients ou gobelets qui peuvent être ainsi acheminés d'un point à un autre suivant des lignes de récipients ou gobelets destinés à être remplis d'une denrée quelconque, puis obturés à l'aide d'un opercule.

Lorsque l'on veut conditionner des récipients de dimensions différentes, il convient de changer les plaques transversales de support de ces récipients, ce qui, comme on le comprend, représente un inconvénient sérieux sur le plan des coûts et de la main d'oeuvre.

Aussi, la présente invention a pour but de pallier ces inconvénients en proposant un dispositif associé aux chaînes d'un convoyeur et qui peut s'adapter à n'importe quelle forme et/ou dimension des récipients destinés à être transportés par ledit convoyeur.

A cet effet, l'invention a pour objet un dispositif de préhension et de retenue d'objets, tels que par exemple des récipients de formes et/ou dimensions quelconques, sur un convoyeur à deux chaînes, courroies ou analogues, sans fin, comprenent deux mécanismes respectivement solidaires des deux chaînes et par deux plaques disposées transversalement aux chaînes et montées par leurs extrémités entre ces deux mécanismes qui permettent le réglage de l'écartement des deux plaques entre les chaînes, caractérisé en ce que les mécanismes précités sont chacun enfermés dans un boîtier fixé sur les chaînes et renfermant deux crémaillères coopérant avec un pignon et attelées chacune à une extrémité des plaques.

On précisera ici que les crémaillères sont attelées aux extrémités des plaques par l'intermédiaire de blocs montés coulissants dans des glissières prévues dans le boîtier.

Selon encore une autre caractéristique de l'invention, on prévoit dans le boîtier un ressort en spirale monté entre l'axe portant le pignon et une paroi du boîtier pour rappeler constamment les plaques précitées en position rapprochée.

Suivant encore une autre caractéristique de l'invention, la commande de l'écartement des plaques est effectuée par une pièce en forme de coin insérable entre les deux plaques ou par un levier solidaire de l'axe du pignon d'entraînement en synchronisme des deux crémaillères, ledit levier pouvant être commandé par un moyen quelconque, tel que par exemple une rampe.

Suivant un mode de réalisation particulièrement avantageux, les plaques précitées sont chacune montées librement oscillantes sur une barre ou analogue attelée par ses extrémités aux blocs précités.

Dès lors, les plaques pourront prendre une inclinaison quelconque pour pouvoir s'adapter à des récipients de forme conique par exemple.

On peut prévoir sur les faces en regard des plaques des berceaux ayant une forme correspondant à celle des récipients ou gobelets.

L'invention vise également un convoyeur à chaînes, courroies ou analogues équipé d'un dispositif répondant à l'une ou l'autre des caractéristiques susmentionnées.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en perspective schématique et partielle d'un convoyeur équipé d'un dispositif conforme aux principes de l'invention ;

La figure 2 est une vue en bout de ce dispositif, suivant la flèche II de la figure 1 ;

La figure 3 est une vue en coupe de l'un des deux mécanismes identiques de commande des plaques, suivant la ligne III-III de la figure 2, et montrant ces plaques en position rapprochée ;

La figure 4 est une vue identique à la figure 3 mais montrant les plaques en position totalement écartée ;

La figure 5 est une vue de dessus, couvercle enlevé, du boîtier contenant le mécanisme d'actionnement des plaques ;

La figure 6 est une vue en coupe suivant la ligne VI-VI de la figure 5 ;

La figure 7 est une vue schématique et en perspective d'un dispositif conforme à l'invention et actionnable par une pièce formant coin ;

La figure 8 est une vue schématique et en perspective de ce dispositif actionnable, non plus par une pièce formant coin, mais par des leviers ou analogues ; et

La figure 9 est une vue schématique et en bout des deux plaques montées oscillantes sur des barres attelées aux mécanismes solidaires des deux chaînes du convoyeur.

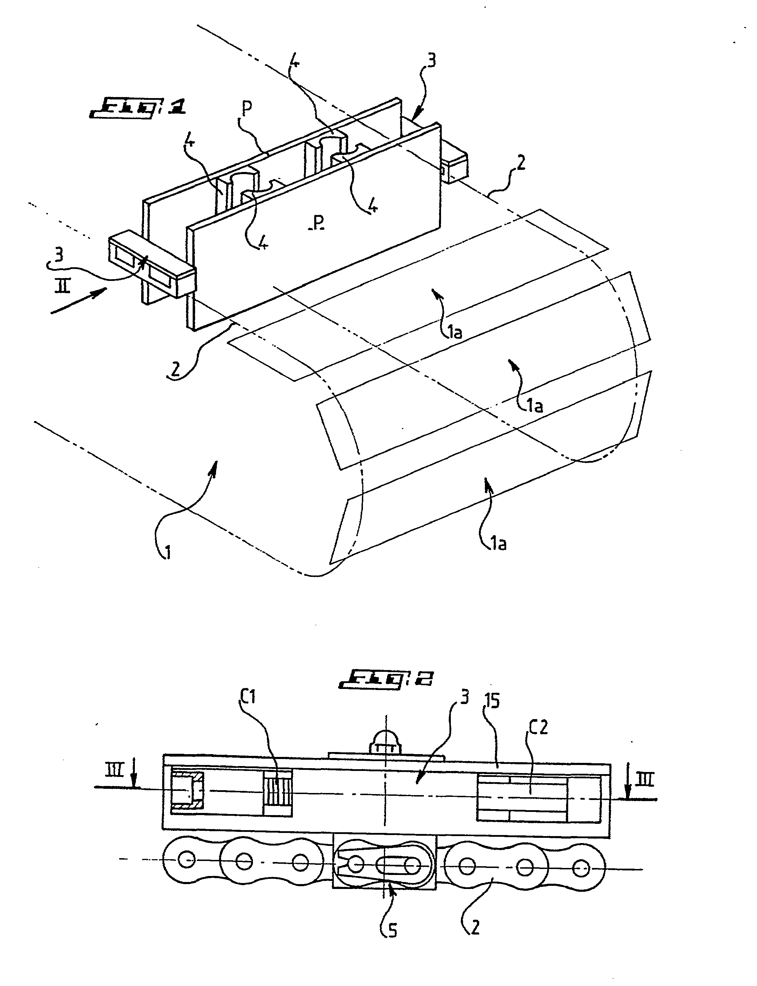

En se reportant à la figure 1, on voit un convoyeur 1 à deux chaînes ou courroies sans fin 2 sur chacune desquelles est fixé un boîtier 3 contentant un mécanisme attelé aux extrémités de deux plaques ou analogues transversales P et permettant le réglage de l'écartement de ces deux plaques pour qu'elles puissent saisir entre elles des récipients de formes et/ou dimensions quelconques.

Bien entendu, plusieurs dispositifs du type ci-dessus sont agencés, suivant un certain pas, transversalement aux chaînes ou courroies 2, comme on l'a montré très schématiquement en 1a.

Les faces en regard des panneaux P peuvent comporter des berceaux 4 en vis-à-vis, comme on le voit sur les figures 1, 7 et 8, ces berceaux pouvant être en métal, en caoutchouc ou en une matière plastique appropriée et ayant une forme correspondant sensiblement à celle des récipients à saisir.

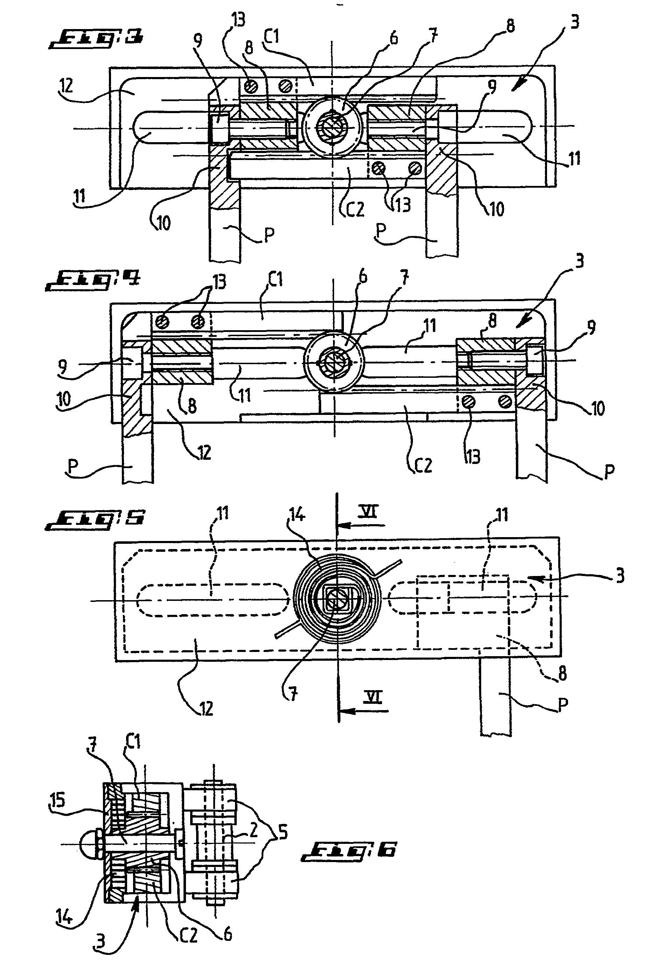

En se reportant plus particulièrement aux figures 2 à 6, on voit que les mécanismes enfermés dans chaque boîtier 3 fixé sur les chaînes 2 par une pièce en forme d'étrier 5, se composent essentiellement de deux crémaillères $C_1$ et $C_2$ engrenant avec un pignon 6 tournant sur un axe 7 entre les deux crémaillères. Ces dernières comportent chacune à leur extrémité un bloc 8 auquel est fixé à l'aide d'une vis 9 par exemple, de manière rigide ou de préférence plus ou moins lâche, une extrémité 10 des deux plaques P.

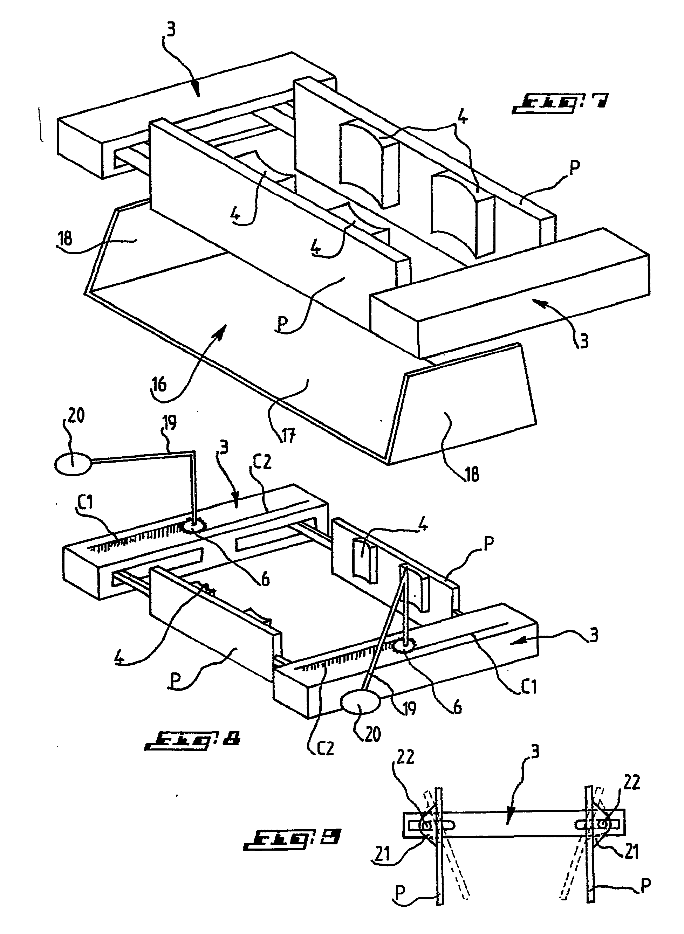

Ainsi, comme on le comprend, la rotation du pignon 6 provoquera l'entraînement en synchronisme des deux crémaillères $C_1$, $C_2$, ce qui provoquera le rapprochement des plaques P comme on le voit sur la figure 3, ou bien l'écartement de ces deux plaques, comme on le voit sur la figure 4.

Les blocs 8 sont montés coulissants dans des glissières 11 ménagées par exemple dans la paroi de fond 12 du boîtier 3. On a montré en 13 des éléments de fixation des crémaillères $C_1$, $C_2$ sur les blocs 8.

Comme cela apparaît clairement sur la figure 5, un ressort en spirale 14 est monté entre l'axe 7 portant le pignon 6 et une paroi du boîtier 3, qui peut être par exemple le couvercle de ce boîtier visible en 15 sur les figures 2 et 6. Ce ressort en spirale 14 rappelle constamment les plaques P en position rapprochée, c'est-à-dire en position de saisie des récipients entre les plaques P. Ces plaques, en position rapprochée ou fermée sur les récipients s'adapteront parfaitement à la forme desdits récipients, non seulement en raison de la présence des berceaux 4, mais, comme expliqué précédemment, en raison de l'attelage lâche des extrémités 10 des plaques P sur les blocs 8 portant les crémaillères $C_1$, $C_2$, ce qui permettra avantageusement auxdites plaques P d'absorber les petites déformations de forme des récipients qui seront donc solidement maintenus.

Comme il apparaît clairement sur la figure 7, l'écartement des plaques P, à l'encontre de la force de rappel du ressort en spirale 14, peut être effectué à l'aide d'une pièce 16 en forme de coin et qui peut être constituée, suivant l'exemple représenté, par une simple plaque 17 dont les extrémités 18 sont repliées vers le haut et présentent une forme de trapèze isocèle.

La pièce 16 pourra être actionnée par tout moyen approprié quelconque pour passer entre les plaques P et les écarter avant d'insérer entre ces plaques une ligne de récipients.

Suivant un autre mode de réalisation, représenté sur la figure 8, l'écartement simultané des plaques P peut être obtenu à l'aide de leviers 19 solidaires de l'axe 7 d'entraînement du pignon 6 qui coopère avec les deux crémaillères $C_1$ et $C_2$ pour les entraîner en synchronisme. Les extrémités 20 des leviers 19 pourront être sollicitées par un moyen quelconque, tel que par exemple une rampe qui permettra la manoeuvre d'écartement des plaques P à l'encontre de la force du ressort de rappel 14.

Les plaques P, comme on le voit bien sur la figure 9 peuvent comporter sur leur face externe des paliers ou analogues 21 dans lesquels passent une barre 22 dont les extrémités sont attelées, comme décrit précédemment, aux blocs 8 portant les crémaillères $C_1$, $C_2$. Ainsi, les plaques P pourront osciller autour des barres 22, ce qui permettra l'adaptation instantanée des plaques P à la forme, par exemple conique, d'un récipient à saisir. Autrement dit, les plaques P pourront s'incliner d'elles-mêmes lors de leur appui sur la paroi du récipient.

Le fonctionnement du dispositif n'a pas besoin d'être expliqué en détail puisqu'il se déduit immédiatement de la description qui précède.

On notera cependant que ce dispositif peut être monté sur un convoyeur à chaînes destiné à équiper une machine quelconque de conditionnement de récipients, ce dispositif permettant le traitement de récipients de formes et/ou dimensions quelconques qui doivent pouvoir être saisis et également relâchés en fin de conditionnement.

**Revendications**

1. Dispositif de préhension et de retenue d'objets, tels que par exemple des récipients de formes et/ou dimensions quelconques, sur un convoyeur à deux chaînes, courroies ou analogues, sans fin, et comprenant deux mécanismes respectivement solidaires des deux chaînes (2) et deux plaques (P) disposées transversalement aux chaînes et montées par leurs extrémités (10) entre ces deux mécanismes qui permettent le réglage de l'écartement des deux plaques entre les chaînes, caractérisé en ce que lesdits mécanismes sont chacun enfermés dans un boîtier (3) fixé sur les chaînes (2) et renfermant deux crémaillères ($C_1$, $C_2$) coopérant avec un pignon (6) et attelées chacune à une extrémité (10) des plaques.

2. Dispositif selon la revendication 1, caractérisé en ce que les crémaillères ($C_1$, $C_2$) sont attelées aux extrémités (10) des plaques par l'intermédiaire de blocs (8) montés coulissants dans des glissières (11) prévues dans le boîtier (3).

3. Dispositif selon la revendication 1 ou 2, caractérisé par un ressort en spirale (14) monté entre l'axe (7) portant le pignon (6) et une paroi du boîtier (3) pour rappeler constamment les plaques précitées (P) en position rapprochée.

4. Dispositif selon l'une des revendications 1 à 3, caractérisé en ce que la commande de l'écartement des plaques (P) est effectuée par une pièce en forme de coin (16) insérable entre les deux plaques ou par un levier (19) solidaire de l'axe (7) du pignon (6) d'entraînement en synchronisme des deux crémaillères ($C_1$, $C_2$).

5. Dispositif selon l'une des revendications 1 à 4, caractérisé en ce que les plaques précitées sont chacune montées librement oscillantes sur une barre ou analogue (22) attelée par ses extrémités aux blocs précités (8).

6. Dispositif selon l'une des revendications 1 à 5, caractérisé en ce que les plaques précitées comportent sur leurs faces en regard, des berceaux (4) ayant une forme correspondant à celles des objets ou récipients.

7. Convoyeur à chaînes, courroies ou analogues, équipé d'un dispositif selon l'une des revendications 1 à 6.

## Claims

1. A device for gripping and retaining objects such as, for example, receptacles of any shape and/or dimensions on an endless conveyor having two chains, belts or the like, and comprising two mechanisms connected respectively to two chains (2) and two plates (P) disposed transversely of the chains and mounted by their ends (10) between said two mechanisms which allow the adjustment of the distance apart of the two plates between the chains, characterized in that said mechanisms are each enclosed in a casing (3) attached to the chains (2) and containing two racks ($C_1$, $C_2$) co-operating with a pinion (6) and each coupled to one end (10) of the plates.

2. A device according to claim 1, characterized in that the racks ($C_1$, $C_2$) are coupled to the ends (10) of the plates via blocks (8) slidably mounted in slides (11) provided in the casing (3).

3. A device according to claims 1 or 2, characterized by a spiral spring (14) mounted between the spindle (7) bearing the pinion (6) and a wall of the casing (3) to constantly return said plates (P) into their position close together.

4. A device according to any of claims 1 to 3, characterized in that the distance apart of the plates (P) is controlled via a wedge-shaped member (16) insertable between the two plates or via a lever (19) connected to the spindle (7) of the pinion (6) for driving the two racks ($C_1$, $C_2$) in synchronism.

5. A device according to any of claims 1 to 4, characterized in that said plates are each mounted to oscillate freely on a bar (22) or the like coupled via its ends to said blocks (8).

6. A device according to any of claims 1 to 5, characterized in that the opposed faces of said plates comprise cradles (4) having a shape corresponding to the shapes of the objects or receptacles.

7. A conveyor having chains, belts or the like, equipped with a device according to any of claims 1 to 6.

## Patentansprüche

1. Greif- und Haltevorrichtung für Gegenstände, beispielsweise Behälter mit beliebigen Formen und/oder Abmessungen auf einem Förderer mit zwei endlosen Ketten, Riemen oder dergl., bestehend aus zwei an den beiden Ketten (2) befestigten Mechanismen und zwei quer zu den Ketten angeordneten Platten (P), die mit ihren Enden (10) zwischen den beiden Mechanismen montiert sind, die die Einstellung des Abstandes der beiden Platten zwischen den Ketten gestatten, dadurch gekennzeichnet, daß die Mechanismen jeweils in einem Kasten (3) enthalten sind, der an den Ketten (2) befestigt ist und zwei Zahnstangen ($C_1$, $C_2$) enthält, die mit einem Zahnrad (6) zusammenwirken und jeweils mit einem Ende (10) der Platten gekoppelt sind.

2. Vorrichtung nach Anspruch 1, dadurch gekennzeichnet, daß die Zahnstangen ($C_1$, $C_2$) an den Enden (10) der Platten über Blöcke (8) angekoppelt sind, die in im Gehäuse (3) vorgesehenen Gleitführungen (11) verschiebbar montiert sind.

3. Vorrichtung nach Anspruch 1 oder 2, gekennzeichnet durch eine Spiralfeder (14), die zwischen der das Zahnrad (6) tragenden Achse (7) und einer Wand des Gehäuses (3) montiert ist und die Platten (P) ständig in die einander angenäherte Stellung zurückholt.

4. Vorrichtung nach einem der vorhergehenden Ansprüche, dadurch gekennzeichnet, daß die Platten (P) durch ein keilförmiges Teil, das zwischen die beiden Platten einführbar ist, oder durch einen Hebel (19) voneinander entfernt werden, der an der Achse (7) des Zahnrads (6) zum synchronen Antrieb der beiden Zahnstangen ($C_1$, $C_2$) befestigt ist.

5. Vorrichtung nach einem der vorhergehenden Ansprüche, dadurch gekennzeichnet, daß die Platten jeweils frei schwenkbar auf einer Stange (22) oder dergl. montiert sind, die mit ihren Enden an die Blöcke (8) angekoppelt ist.

6. Vorrichtung nach einem der vorhergehenden Ansprüche, dadurch gekennzeichnet, daß die Platten auf ihren einander gegenüberstehenden Flächen Backen (4) besitzen, die eine der Form der Gegenstände oder Behälter entsprechende Form besitzen.

7. Förderer mit Ketten, Riemen oder dergl., ausgerüstet mit einer Vorrichtung gemäß einem der vorhergehenden Ansprüche.

Fig. 1

Fig. 2

Fig. 3

Fig. 4

Fig. 5

Fig. 6

FIG.7

FIG.8

FIG.9